# EUROPEAN PATENT SPECIFICATION

(11) **EP 4 029 735 B1**
(45) Date of publication and mention of the grant of the patent: **06.11.2024**
(21) Application number: 21215479.3
(22) Date of filing: 17.12.2021
(51) Int. Cl.: B60R 5/00, B60R 7/08, B60R 9/048, E06C 1/36, E06C 5/24

(54) **HOLDING DEVICE**
HALTEVORRICHTUNG
DISPOSITIF DE MAINTIEN

(30) Priority: 19.01.2021 SE 2150048
(43) Date of publication of application: 20.07.2022
(73) Proprietor: Work System Sweden AB, 561 61 Tenhult (SE)
(72) Inventor: HALLENBORG, Jonas, 553 24 Jönköping (SE)
(74) Representative: Bergenstråhle & Partners AB

(56) References cited:
- WO-A2-2005/026490
- US-A1- 2019 118 627
- US-B1- 10 501 022

## Description

### Technical field

The present invention relates to a holding device arranged to be mounted to a surface. The holding device is used for holding an item such as a ladder or the like during transport or non-use, preferably inside a cargo space or back space of a service vehicle or work vehicle.

### Background art

It is known within the art to equip a cargo space, at for example a service vehicle, with different kinds of storing systems, like cupboards, shelves, boxes, tool holders, etc. Once the vehicle has been manufactured, a separate step of equipping the vehicle with different kind of interior, tailor made or modular, takes place. This step may also include to provide the cargo space with separate floor, walls, and ceiling, for example made by wood, depending on which type of interior is needed. This step may also include to directly fit for example specially adapted rails etc. to the insides of the cargo space.

Most holding devices for long items are designed for and positioned for storing, for example the ladder, outside the vehicle, most common on a roof rack on top of the vehicle. One problem with that is that the ladder is exposed for weather and dirt and another problem is a risk of theft. Further, it is often quite difficult to attach the ladder on top of the roof rack or to dismount the ladder from the roof rack, since most such vehicles are high. Therefore, solutions with holding devices for ladders and other long items, to securely hold and store ladders or the like inside a cargo space are developed. One problem with storing inside a cargo space is that mounting and removing for example the ladder often is difficult and time consuming, since it is crucial to store the ladder somewhere in the often very occupied cargo space, where it is out of way but easy to reach. Prior art solutions present different solution with straps or the like, to strap the ladder to rails or hooks attached to a wall or the ceiling inside the cargo space. For example, some prior art solutions present holding devices attached to an elongate rail attached to the ceiling and which rail extends from the back of the cargo space and forwards. A front holder may be slidingly arranged to the rail while a back holder is fixed to the rail in a determined position. A user may place one end of the ladder into the front holder and push the ladder forwards until the other end of the ladder is in position to be positioned into the back holder. Finally, a safety strap is used to secure the ladder at the back end.

Other solutions may comprise for example a cord or the like of a determined length and strength, which cord connects a fixed back holder with a movable front holder. This solution is used in the same way as presented above, but additionally, when the ladder is placed in the front holder and is pushed forwards, the cord is tensioned, and by that, the ladder is clamped between the holders.

One known solution for loading and unloading of a ladder outside a vehicle, on top of a vehicle roof, is presented in US 10,501,022 B1 which shows the features of the preamble of claim 1. The solution provides a holder including a tiltable and length-adjustable roof rack on which a ladder may be loaded and clamped in a more or less upright position by a user, for example behind the vehicle. When loaded and clamped in a secure manner by means of adjustable upper and lower holders, the tiltable part of the roof rack, including the ladder may be tilted up and slid forwards along the roof part of the rack on top of the vehicle roof. The holder comprises a ladder latching mechanism where a spring-biased lever is arranged to cooperate with a toothed rack for and the lever is spring-biased against the toothed rack by a compression spring. The ladder is clamped between the first and second holders and is released by pressing down a pedal, wherein the lower holder is caused to descend, wherein the lever will "click" along the toothed rack until the feet of the ladder engage the ground and the ladder's rungs will no longer be captured by the upper holder and the lower holder.

One known solution for folding and unfolding a tarpaulin structure is presented in US 2019/0118627 A1. The tarpaulin structure comprises a plurality of brackets, wherein adjacent brackets are coupled to each other by means of a kinematic connecting rod assembly that folds when a folding top-frame is collapsed.

Prior art solutions presented above first of all lack flexibility in combination with an easy way of "loading/unloading" the long item, for example the ladder. When loading the ladder, it is convenient to have a counterforce to the forward motion of the ladder since this prevents the front holder to slide away from the user while applying the ladder to the holder and while pushing it forwards. The solution with the cord attached between the two holders solve that problem, but this solution is not flexible since the position of the back holder is fixed, why the stored ladder may not be moved out of way, when not used under a period of time. Another drawback with the "cord-solution" is that the length and the strength of cord must be adapted to the length of the ladder, why the solution must be adapted every time the holder device is to be mounted to a vehicle. Often the length of the ladder or the item to be stored is not known when equipping the vehicle, or the item may be replaced during the lifetime of the service vehicle, why the solution is not flexible.

### Summary of the invention

It is an object of the invention to address at least some of the problems and issues outlined above. It is possible to achieve these objects and others by a holding device as defined in the attached independent claims, which by its design is easy to use and provides great flexibility and secure fastening of an item like for example elongate items like a ladder or the like.

According to an aspect of the invention, a holding device which is arranged to be mounted to a surface, preferably to a ceiling inside a cargo space of a vehicle, is disclosed. The holding device comprises at least one elongate rail which extends between a first end and a second end. The rail further comprises a first side which is arranged to be fixedly attached to said surface, and a second side which is opposite the first side. Further, a first holder is movably connected at the second side of the rail and is further arranged to slide along the rail between the first and second ends of the rail. A second holder is arranged to be fixedly connected at the second side of the rail in an optionable position along the rail, between the first holder and one of the first and second ends of the rail. The first holder comprises a spring attached with a first end to the first holder and attached with a second end to a mount. The mount is arranged to be fixedly connected at the second side of the rail in an optionable position along the rail, between the first holder and the second holder.

By that, a flexible and convenient holding device is disclosed. The holding device is easy to use, since the user may place one end of for example a ladder into the first holder, which by the spring force of the spring is positioned near the mount. The mount is fixedly connected to the rail in a position which allows an easy reach for the user to position the first end (front) of the ladder on the first holder. When the user pushes the ladder forwards, the spring is tensioned and provides a counterforce to the forward motion, which prevent the first holder from sliding away from the user in an uncontrolled manner with risk of the ladder falling of the first holder. When the second end (back end) of the ladder comes into position of the second holder, the user positions the back end of the ladder into the second holder, wherein the ladder is securely clamped between the holders. By having a mount, which is to be positioned in any position between the first (front) holder and the second (back) holder of the holding device, the "start position" of the first holder is optionable and if wanted and depending on the spring type the clamping force may be controlled. Further, by that also the second holder is arranged to be fixedly connected to the rail in an optionable position, the ladder is possible to store in an optionable position along the rail. This allows to store the ladder or the item to be stored in a position away from the back opening of the cargo space, which is convenient if the item or the ladder is not to be used for a period of time, and thus is out of way from the back opening of the vehicle. No prior art solutions provide such secure and flexible solution.

Further, the spring is a band spring. By using a band spring, the spring force is easy to adjust, by for example different windings of the band spring around a center of a strip or winder roll or the like.

Further, the band spring is a constant force band spring. A constant force spring may consist of a band material which is formed and prestressed into a tightly wound strip roll. The spring is used in a linear movement and gives a constant or almost constant spring force. The constant force band spring may be mounted in several ways and extended in part or all its length. There is no limit in principle for extraction speed and acceleration. Using a constant force spring band means that independently of the positioning of the mount, the spring force is substantially constant during the movement of the first holder.

According to an embodiment, the first holder comprises a housing arranged for accommodate the spring, wherein the first end of the spring is attached to the housing. The housing encloses and protects the first end of the spring and preferably the part of the spring which is not extended. If using a band spring, the housing encloses and thereby protects the winded part of the spring and a winder roll. The housing also comprises an outlet opening allowing the spring to extend out from the housing.

According to an embodiment, the mount comprises a first locking arrangement arranged for locking the mount to the rail in a locked state and arranged for unlocking the mount in an unlocked state, wherein the mount is arranged to slide along the rail in the unlocked state. The first locking arrangement may be a screw with a handle and a sliding block with a threaded hole, wherein the screw is in threaded connection with the sliding block. By tightening the screw, the sliding block is clamped to the rail and the mount is locked to the rail, and by loosening the screw, the sliding block is released from the clamped position and the mount is unlocked from the rail. By that, the mount is slidable along the rail and arranged to be locked in any position along the rail, which provides an easy setting of the "start position" of the first holder, which by its spring force of the spring is drawn towards the mount, which in the locked position acts as a stop for the mount. Further, in the unlocked position of the mount, the first holder position is optionable along the rail, which is convenient if the item/the ladder is to be stored in another position further in, in the forward direction (if also the second holder is moved).

According to an embodiment, the second holder comprises a second locking arrangement, which is arranged for locking the second holder to the rail in a locked state and arranged for unlocking the second holder in an unlocked state, wherein second holder is arranged to slide along the rail in the unlocked state. The second locking arrangement may be similar as the first locking arrangement (a screw with a handle and a sliding block with a threaded hole) and work in the same way as described above. By tightening the screw, the sliding block is clamped to the rail and the second holder is locked to the rail, and by loosening the screw, the sliding block is released from the clamped position and the second holder is unlocked from the rail. By that, the second holder is slidable along the rail and arranged to be locked in any position along the rail, which provides an easy setting which is adapted to the length of the item/the ladder. In the unlocked position, the second holder is possible to lock in an optionable along the rail, which is convenient for example when a ladder is not to be used for a period of time, and preferably is to be stored in a position out of way. Thus, both the first holder with its mount and the second holder must be unlocked, wherein the ladder in its clamped state between the holders may be moved to any position along the rail.

According to an embodiment, the first holder comprises a first shank which is arranged substantially perpendicular relative the rail and a second shank which is arranged substantially perpendicular relative the first shank at a first distance relative the rail. The second shank of the first holder protrudes in direction towards the second holder, and the first distance is optionable by that the first shank is adjustably arranged at the first holder or by that the second shank is adjustably arranged at the first shank. Such a solution is flexible since items or ladders with different design and width etc. may be stored by adjusting the distance between the second holder and the rail to correspond to the item/ladder.

According to an embodiment, the second holder comprises a third shank which is arranged substantially perpendicular relative the rail and a fourth shank which is arranged substantially perpendicular relative third shank at a second distance relative the rail. The fourth shank of the second holder protrudes in direction towards the first holder, and the second distance is optionable by that the third shank is adjustably arranged at the second holder or by that the fourth shank is adjustably arranged at the third shank. This, for the same reasons as presented above, to be able to adjust the second holder to the item to be clamped between the holders.

According to an embodiment, the rail comprises a first guiding space extending between the first end and the second end and with a first opening facing the second side of the rail. The first guiding space is arranged to guide the first holder, the mount and the second holder when moved along the rail, wherein the first holder, the mount and the second holder having first means, each arranged into the first guiding space and arranged to slide along the first guiding space of the rail. The dimensions of the first means and the guiding space are adopted for allowing a smooth guiding in the unlocked state of the second holder and the mount when moved to wanted positions as well as the sliding motion of the first holder during the storing of the item to be stored, such as a ladder.

According to an embodiment, the rail further comprises at least one first attachment device for attachment of the holding device to said surface, wherein the rail further comprises a second guiding space which extends between the first end and the second end and which has a second opening facing the first side of the rail. The second guiding space is arranged to accommodate and guide the at least one first attachment device, wherein the at least one first attachment device is arranged to be connected to the rail in an optionable position along the rail by having second means arranged into the second guiding space and arranged to slide along the second guiding space of the rail. Such a solution provides an easy adaption of where to fix the rail to the ceiling inside a cargo space, such that holding device is mountable in different kinds of interiors of the cargo space.

According to an embodiment, the rail further comprises at least one second attachment device for attachment of the holding device to said surface, wherein the rail further comprises a plurality of spaced apart holes arranged along the rail. The at least one second attachment device is arranged to be connected to the rail in an optionable position along the rail by having third means which are arrangeable into the at least one of the holes along the rail. This provides a plurality of positions for fixing the rail to the surface, i.e., to the inside ceiling of the cargo space. This second attachment device may be attached to the sides of the rail and provides another anchoring possibility compared to the first attachment device.

The holding device may comprise a number of first attachment devices, a number of second attachment devices or most preferred a combination of first and second attachment devices to allow different attachment possibilities to mount the holding device to a substrate like a ceiling in the cargo space of a vehicle.

According to an embodiment, the second holder comprises a strap which is arranged to secure an item to the second holder. This strap may be used as an extra safety and preferably has one end fixed to the second holder and another end which arranged to be secured to the second holder when the item/the ladder is clamped between the first and second holders.

Further possible features and benefits of this solution will become apparent from the detailed description below.

### Brief description of drawings

The solution will now be described in more detail by means of exemplary embodiments and with reference to the accompanying drawings, in which:
Fig. 1 is a view of a holding device according to the invention, seen obliquely from above.
Fig. 2a is a section of a first holder of the holding device of Fig. 1, seen obliquely from above.
Fig. 2b is a section of the first holder of Fig. 2a.
Fig. 3a is a view of a second holder of the holding device of Fig. 1, seen obliquely from above.
Fig. 3b is a section of the second holder of Fig. 3a, seen obliquely from above.
Fig. 3c is a section of the second holder of Fig. 3b.

### Detailed description

Briefly described, a holding device arranged for holding an item like a ladder or the like, is disclosed. The inventive design provides a convenient and secure solution for storing an item, preferably inside a cargo space of a vehicle. Of course, the inventive concept may be used outside a vehicle, for example on a roof rack or the like.

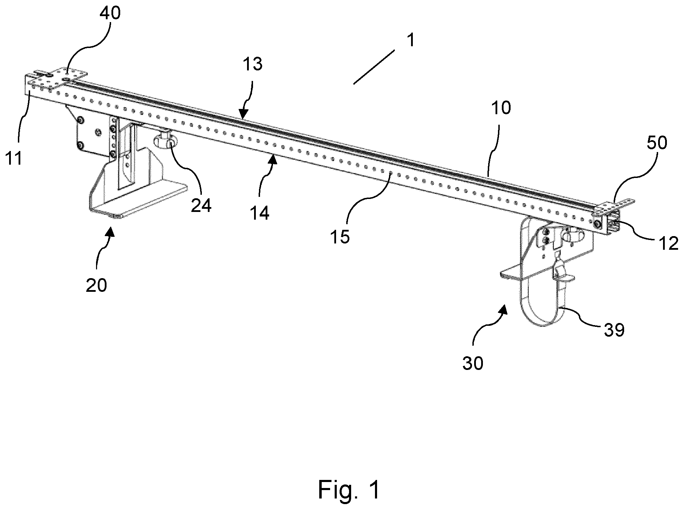

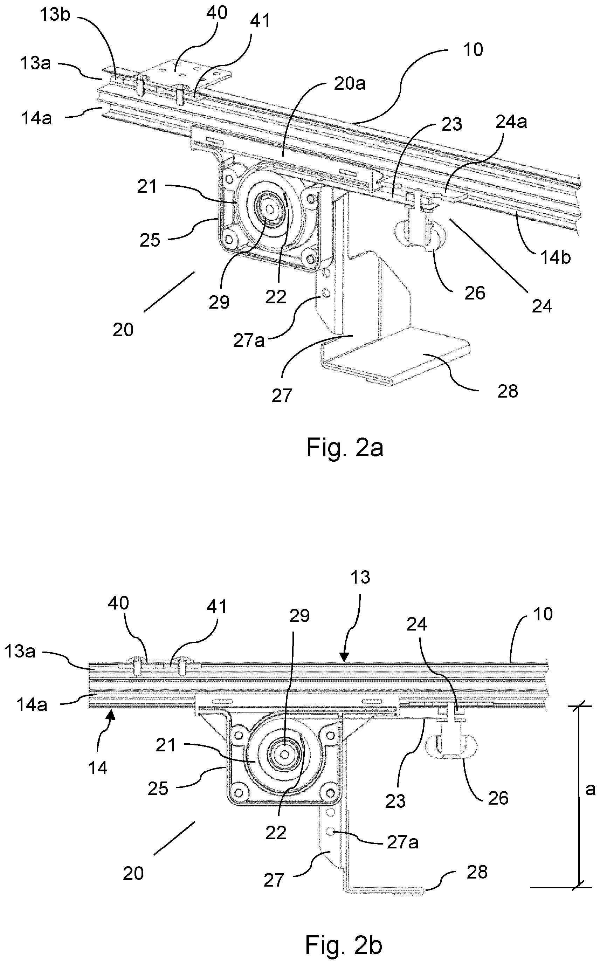

Fig. 1 shows a view of a holding device 1 according to the invention, seen obliquely from above. The holding device 1 is arranged to be mounted to a surface, preferably to a ceiling inside a cargo space of a vehicle. The holding device 1 comprises at least one elongate rail 10 which extends between a first end 11 and a second end 12 of the rail 10. The first end 11 is preferably a front end referring to the cargo space and the traveling direction of a vehicle, and the second end 12 of the rail 10 is preferably a back end. The rail 10 further comprises a first side 13 which is arranged to be fixedly attached to said surface by means of at least one first attachment device 40, positioned closer to the first end 11 of the rail 10, and at least one second attachment device 50, positioned closer to the opposite second end 12 of the rail 10. The first attachment device 40 is movably arranged in an elongate slot/recess and lockable to the slot, which will be explained in detail below, and the second attachment device 50 is also movable and lockable to the rail 10, but to the outside of the rail 10 via holes 15. Of course, the mounting of the rail 10 to the ceiling of the vehicle may be done with only one kind of attachment device, and with a plurality of attachment devices, depending on the situation and demands of the holder device 1. The rail 10 further comprises a second side 14 which is opposite the first side 13 and the holding device 1 further comprises a first holder 20, which as mentioned above is a front holder, and which is movably connected at the second side 14 of the rail 10 and arranged to slide along the rail 10 between the first and second ends 11, 12 of the rail 10. The first holder 20 comprises a spring (not visible, see Fig. 2a-b) attached to the first holder 20 with one end and attached with another end to a mount 24. The mount 24 is arranged to be fixedly connected at the second side 14 of the rail 10 in an optionable position along the rail 10, between the first holder 20 and a second holder 30. This will be further explained below. The second holder 30, which as mentioned above is a back holder for the item, is arranged to be fixedly connected at the second side 14 of the rail 10 in an optionable position along the rail 10, between the first holder 20 and one of the first and second ends 11, 12 of the rail 10, which in the preferred embodiment is the second end 12.

The function of the holding device 1 is exemplified by the holding device 1 being a holder for a ladder. Typically, the holding device 1 is mounted in the ceiling of a cargo space of a service vehicle, in the traveling direction, and it is very common that the service vehicle has one or two back doors. To store the ladder inside the cargo space, the user opens the back doors of the vehicle and positions one end of the ladder on the first holder 20, which is positioned at a convenient distance from the back doors by that the mount 24 is fixed to the rail 10 at about that distance. By that, the first holder 20 is by the spring force of the spring drawn to the mount 24 and abuts the mount 24. When one end of the ladder is positioned onto the first holder 20, the user pushes the ladder forwards, wherein the first holder 20 slides along the rail 10, until the other end of the ladder is in position to be lifted and positioned onto the second holder 30. When the ladder is positioned between the first and second holders, 20, 30, the ladder is clamped between them by the spring force of the spring. The second holder 30 preferably comprises a strap 39, which may be used to secure the item/the ladder as an extra safety. More functionality will be explained below in relation to detail drawings of the first and second holders.

Fig. 2a-b show sections of the first holder 20, the mount 24 and the rail 10, seen obliquely from above in Fig. 2a and from the side in Fig. 2b. Further, the figures show how the first holder 20 and the mount 24 are attached to the rail 10. The rail 10 preferably has an H-shape and comprises a first guiding space 14a (arranged as an elongate groove/slot), which extends between the first end 11 and the second end 12 of the rail 10 and with a first opening 14b facing the second side 14 of the rail 10 (see Fig. 1). The first holder 20 and the mount 24 each has first means 20a, 24a which are arranged into the first guiding space 14a and which are arranged to slide along the first guiding space 14a of the rail 10. Thus, the first guiding space 14a is arranged to guide the first holder 20 and the mount 24 via the first means 20a, 24a when the first holder 20 and the mount 24 are moved along the rail 10.

The first holder 20 comprises a housing 25, which is arranged for accommodate the spring 21. The spring 21 is according to the preferred embodiment a band spring, and more preferred a constant force band spring 21. A first end 22 of the spring 21 is attached to the housing 25 of the first holder 20, more precise at a center/roll 29 of the housing 25. A second end 23 of the spring 21 is attached to the mount 24. The mount 24 comprises a first locking arrangement 26, which is arranged to lock the mount 24 to the rail 10 in a locked state and arranged to unlock the mount 24 in an unlocked state. The first locking arrangement 26 preferably is a screw with a handle and the first means 24a of the mount 24 preferably is a sliding block with a threaded hole, wherein the screw is in threaded connection with the sliding block. By tightening the screw by rotating the handle clockwise, the sliding block is clamped to the rail 10 and the mount 24 is locked to the rail 10. And vice versa, by loosening the screw counterclockwise, the sliding block is released from the clamped position and the mount 24 is unlocked from the rail 10. By that, the mount 24 is slidable along the rail 10 and arranged to be locked in any position along the rail 10. The mount 24 further functions as a stop for the first holder 20, since the spring force of the spring 21 causes the first holder to move towards the mount 24 if no item (ladder) is positioned on the first holder 20 and is held in that position or pushed forwards. The setting of the locked position of the mount 24 to the rail 10 is preferably chosen to have a convenient and ergonomic position and distance from the back doors of the vehicle, for placing the first end of the ladder in an easy way.

The spring 21 is preferred to be a band spring and more preferred band spring with constant force, which means that the spring force is substantially constant, independently of how much of the band spring 21 is rolled out from its rolled state in the housing 25, while pushing the first holder 20 forwards. This also means that even if the mount 24 is positioned near the back doors of the vehicle, the spring force is not substantially increased while pushing the first holder 20 a forwards into the cargo space, even if a long ladder or the like is to be stored in the cargo space of the vehicle. If another, not constant force band spring is used, the spring force could get rather high if the mount 24 is positioned in a convenient position near the back doors and if the ladder is long, wherein the travelling distance of the first holder 20 would be long. Thus, it would be needed an increasing force the longer distance the first holder is pushed, if a non-constant force spring is used.

To be able to receive an end of a ladder or an item, the first holder 20 comprises a first shank 27 which is attached to the housing 25 and thus is arranged perpendicular relative the rail 10. At an outer end of the first shank 27, a second shank 28 is arranged and protrudes in direction towards the second holder 30, substantially perpendicular relative the first shank 27. The second shank 28 functions as a support for an end of a ladder or the like. To be able to adapt the first holder 20 to different ladders or items with different heights, a first distance a between the second shank 28 and the rail 10 is optionable, by that the first shank 27 comprises a plurality of spaced apart holes 27a, which allows to screw the first shank 27 to the housing 25 in different positions such as the first distance a can be adjusted.

As mentioned above the rail 10 is H-shaped, wherein the rail 10 further comprises a second guiding space 13a, which extends between the first end 11 and the second end 12 of the rail 10 and which second guiding space 13a has a second opening 13b facing the first side 13 of the rail 10. The holding device 1 further comprises at least one first attachment device 40 for attachment of the holding device 1 to a surface, preferably the ceiling inside the cargo space of a vehicle. The second guiding space 13a is arranged to accommodate and guide the at least one first attachment device 40 when positioning and mounting the first attachment device 40 to the ceiling or other interior part to which the rail 10 is to be mounted. The at least one first attachment device 40 is in turn arranged to be connected to the rail 10 in an optionable position along the rail 10 by that second means 41, which is arranged into the second guiding space 13a may slide along the rail 10 to a position where the fixation of the first attachment device 40 is to be performed. In this position, the second means 41 of the first attachment device 40 is locked to the rail by clamping the first attachment device 40 to the second means 41 by screws or the like. By that the second attachment device 40 is slidable along the rail 10, the positioning of the second attachment device 40 is simplified and it is very easy to attach the holding device 1 to the substrate (ceiling or rack or the like).

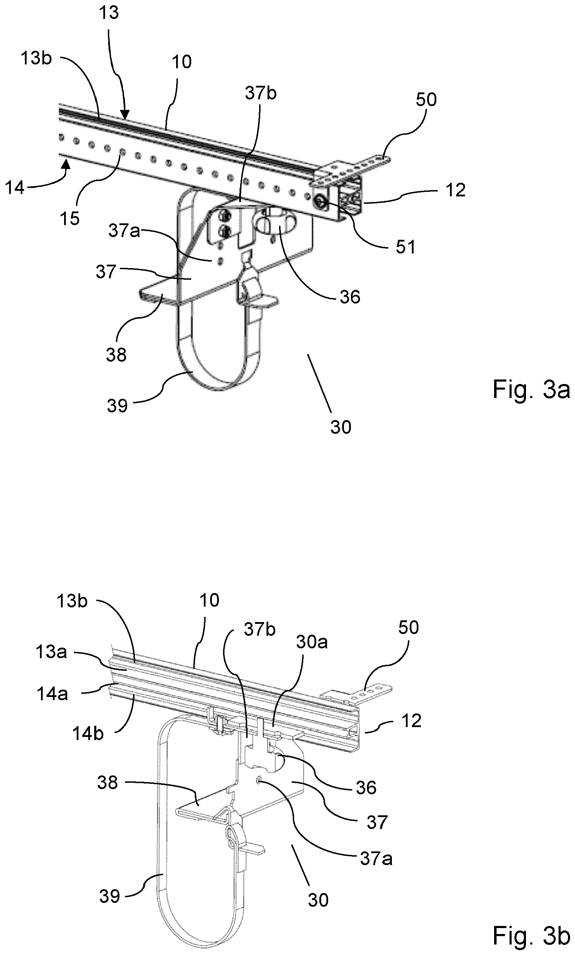

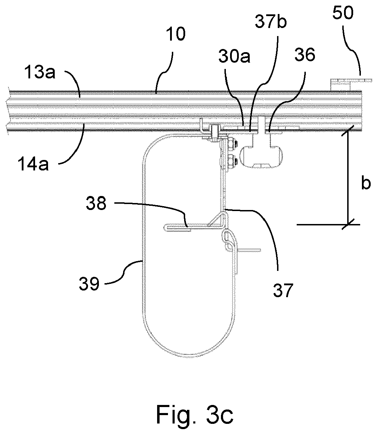

Fig. 3a is a view of the second holder 30 of the holding device 1, seen obliquely from above, and Fig. 3b and 3c shows sections of the second holder 30, seen obliquely from above and from the side. The second holder 30 is arranged to hold an end of an item like a ladder, preferably in a position closer to the back doors of a cargo space of a vehicle compared to the position of the first holder 20. As mentioned before, the first holder 20 is preferably a front holder and the second holder 30 is a back holder for the ladder. The second holder 30 is arranged to be fixedly connected at the second side 14 of the rail 10 in an optionable position along the rail 10, somewhere between the first holder 20 and the second end 12 of the rail 10. The second holder 30 therefore has first means 30a which is arranged to fit into the first guiding space 14a and which means 30a is arranged to slide along the first guiding space 14a of the rail 10. Of course, the first guiding space 14a is arranged to guide the second holder 30/the first means 30a when the second holder 30 is moved along the rail 10. The second holder 30 further comprises a second locking arrangement 36, which is arranged to lock the second holder 30 to the rail 10 in a locked state and arranged to unlock the second holder 30 in an unlocked state. The second locking arrangement 36 preferably is a screw with a handle and the first means 30a of second holder 30 preferably is a sliding block with a threaded hole, wherein the screw is in threaded connection with the sliding block. By tightening the screw by rotating the handle clockwise, the sliding block is clamped to the rail 10 and the second holder 30 is locked to the rail 10. And vice versa, by loosening the screw counterclockwise, the sliding block is released from the clamped position and the second holder 30 is unlocked from the rail 10. By that, the second holder 30 is slidable along the rail 10 and arranged to be locked in any position along the rail 10.

To be able to receive an end of a ladder or an item, the second holder 30 comprises a third shank 37 which is arranged perpendicular relative the rail 10. At an outer end of the third shank 37, a fourth shank 38 is arranged and protrudes in direction towards the first holder 20, substantially perpendicular relative the third shank 37. The fourth shank 38 functions as a support for an end of a ladder. To be able to adapt the second holder 30 to different ladders or items with different heights, a second distance b between the fourth shank 38 and the rail 10 is optionable, by that the third shank 37 comprises a plurality of spaced apart holes 37a, which allows to screw the first shank 37 to an angled bracket 37b, which has corresponding holes, in different positions such as the second distance b can be adjusted. The angled bracket 37b preferably comprises one shank extending along the rail 10 and which is positioned between the handle of the second locking arrangement 36 and the rail 10, to be able to be clamped to the rail 10 while locking the second holder to the rail 10 by the second locking arrangement 36. A second shank of the angled bracket 37b preferably is perpendicularly arranged relative the rail 10 and thus extending in the same direction as the third shank 37 of the second holder 30.

To add the possibility to add extra securing possibilities for fixing the ladder when clamped between the first and second holders 20, 30, the second holder may comprise a strap 39. The strap 39 is secured with one end to the angled bracket 37b or the third shank 37, and the other end of the strap 39 is removably attached to the third shank 37 of the second holder 30. The strap 39 may also be adjustable in any known way.

The holding device 1 further comprises at least one second attachment device 50 for attachment of the holding device 1 to a ceiling inside the cargo space of a vehicle. The second guiding space 13a of the rail 10 is arranged to accommodate and guide also the at least one second attachment device 50 when positioning and mounting the second attachment device 50 to the ceiling or other interior part to which the rail 10 is to be mounted. The at least one second attachment device 50 is arranged to be connected to the rail 10 in an optionable position along the rail 10 by that the rail 10 comprises a plurality of spaced apart holes 15 arranged along longsides of the rail 10, as mentioned above, and the at least one second attachment device 50 comprises third means 51, which are arrangeable into the at least one of the holes 15 along the rail 10. Preferably the third means is one or more screws which are insertable into the holes 15 of the rail 10, and which may be used to fix the second attachment device 50 to the rail 10.

## Claims

1. Holding device (1) arranged to be mounted to a surface inside a cargo space of a vehicle, the holding device (1) comprising:
at least one elongate rail (10) extending between a first end (11) and a second end (12), the rail (10) further comprising a first side (13) which is arranged to be fixedly attached to said surface, and a second side (14) which is opposite the first side (13),
a first holder (20) movably connected at the second side (14) of the rail (10), and arranged to slide along the rail (10) between the first and second ends (11, 12) of the rail (10),
a second holder (30), arranged to be fixedly connected at the second side (14) of the rail (10) in an optionable position along the rail (10), between the first holder (20) and one of the first and second ends (11, 12) of the rail (10), **characterized by that** the first holder (20) comprises a spring (21) attached with a first end (22) to the first holder (20) and attached with a second end (23) to a mount (24), which mount (24) is arranged to be fixedly connected at the second side (14) of the rail (10) in an optionable position along the rail (10), between the first holder (20) and the second holder (30), wherein the spring (21) is a constant force band spring (21).

2. Holding device (1) according to claim 1, wherein the first holder (20) comprises a housing (25) arranged for accommodate the spring (21), wherein the first end (22) of the spring (21) is attached to the housing (25).

3. Holding device (1) according to any of the preceding claims, wherein the mount (24) comprises a first locking arrangement (26) arranged for locking the mount (24) to the rail (10) in a locked state and arranged for unlocking the mount (24) in an unlocked state, wherein the mount (24) is arranged to slide along the rail (10) in the unlocked state.

4. Holding device (1) according to any of the preceding claims, wherein the second holder (30) comprises a second locking arrangement (36) arranged for locking the second holder (30) to the rail (10) in a locked state and arranged for unlocking the second holder (30) in an unlocked state, wherein second holder (30) is arranged to slide along the rail (10) in the unlocked state.

5. Holding device (1) according to any of the preceding claims, wherein the first holder (20) comprises a first shank (27) which is arranged substantially perpendicular relative the rail (10) and a second shank (28) which is arranged substantially perpendicular relative the first shank (27) at a first distance (a) relative the rail (10) and protrudes in direction towards the second holder (30), wherein the first distance (a) is optionable by that the first shank (27) is adjustably arranged at the first holder (20) or by that the second shank (28) is adjustably arranged at the first shank (27).

6. Holding device (1) according to any of the preceding claims, wherein the second holder (30) comprises a third shank (37) which is arranged substantially perpendicular relative the rail (10) and a fourth shank (38) which is arranged substantially perpendicular relative third shank (37) at a second distance (b) relative the rail (10) and protrudes in direction towards the first holder (20), wherein the second distance (b) is optionable by that the third shank (37) is adjustably arranged at the second holder (30) or by that the fourth shank (38) is adjustably arranged at the third shank (37).

7. Holding device (1) according to any of the preceding claims, wherein the rail (10) comprises a first guiding space (14a) extending between the first end (11) and the second end (12) and with a first opening (14b) facing the second side (14) of the rail (10), wherein the first guiding space (14a) is arranged to guide the first holder (20), the mount (24) and the second holder (30) when moved along the rail (10), wherein the first holder (20), the mount (24) and the second holder (30) having first means (20a, 24a, 30a) each arranged into the first guiding space (14a) and arranged to slide along the first guiding space (14a) of the rail (10).

8. Holding device (1) according to any of the preceding claims, wherein the rail (10) further comprises at least one first attachment device (40) for attachment of the holding device (1) to said surface, wherein the rail (10) further comprises a second guiding space (13a) which extends between the first end (11) and the second end (12) and which has a second opening (13b) facing the first side (13) of the rail (10), wherein the second guiding space (13a) is arranged to accommodate and guide the at least one first attachment device (40), wherein the at least one first attachment device (40) is arranged to be connected to the rail (10) in an optionable position along the rail (10) by having second means (41) arranged into the second guiding space (13a) and arranged to slide along the second guiding space (13a) of the rail (10).

9. Holding device (1) according to any of the preceding claims, wherein the rail (10) further comprises at least one second attachment device (50) for attachment of the holding device (1) to said surface, wherein the rail (10) further comprises a plurality of spaced apart holes (15) arranged along the rail (10), wherein the at least one second attachment device (50) is arranged to be connected to the rail (10) in an optionable position along the rail (10) by having third means (51) which are arrangeable into the at least one of the holes (15) along the rail (10).

10. Holding device (1) according to any of the preceding claims, wherein the second holder (30) comprises a strap (39) for securing an item to the second holder (30).

## Patentansprüche

1. Haltevorrichtung (1), die dazu angeordnet ist, an einer Fläche innerhalb eines Laderaums eines Fahrzeugs montiert zu sein, wobei die Haltevorrichtung (1) Folgendes umfasst:
mindestens eine längliche Schiene (10), die sich zwischen einem ersten Ende (11) und einem zweiten Ende (12) erstreckt, wobei die Schiene (10) ferner eine erste Seite (13), die dazu angeordnet ist, fest an der Fläche befestigt zu sein, und eine der ersten Seite (13) entgegengesetzte zweite Seite (14) umfasst,
eine erste Halterung (20), die beweglich mit der zweiten Seite (14) der Schiene (10) verbunden und dazu angeordnet ist, sich zwischen dem ersten und zweiten Ende (11, 12) der Schiene (10) entlang der Schiene (10) zu verschieben,
eine zweite Halterung (30), die dazu angeordnet ist, auf der zweiten Seite (14) der Schiene (10) in einer veränderbaren Position entlang der Schiene (10) zwischen der ersten Halterung (20) und dem ersten oder zweiten Ende (11, 12) der Schiene (10) fest verbunden zu sein, **dadurch gekennzeichnet, dass** die erste Halterung (20) eine Feder (21) umfasst, die mit einem ersten Ende (22) an der ersten Halterung (20) befestigt ist und mit einem zweiten Ende (23) an einer Aufnahme (24) befestigt ist, wobei die Aufnahme (24) dazu angeordnet ist, auf der zweiten Seite (14) der Schiene (10) in einer veränderbaren Position entlang der Schiene (10) zwischen der ersten Halterung (20) und der zweiten Halterung (30) fest verbunden zu sein, wobei die Feder (21) eine Konstantkraftbandfeder (21) ist.

2. Haltevorrichtung (1) nach Anspruch 1, wobei die erste Halterung (20) ein Gehäuse (25) umfasst, das dazu angeordnet ist, die Feder (21) aufzunehmen, wobei das erste Ende (22) der Feder (21) am Gehäuse (25) befestigt ist.

3. Haltevorrichtung (1) nach einem der vorstehenden Ansprüche, wobei die Aufnahme (24) eine erste Verriegelungsanordnung (26) umfasst, die dazu angeordnet ist, die Aufnahme (24) im Verriegelungszustand an der Schiene (10) zu verriegeln, und dazu angeordnet ist, die Aufnahme (24) im Entriegelungszustand zu entriegeln, wobei die Aufnahme (24) dazu angeordnet ist, sich im Entriegelungszustand entlang der Schiene (10) zu verschieben.

4. Haltevorrichtung (1) nach einem der vorstehenden Ansprüche, wobei die zweite Halterung (30) eine zweite Verriegelungsanordnung (36) umfasst, die dazu angeordnet ist, die zweite Halterung (30) im Verriegelungszustand an der Schiene (10) zu verriegeln, und dazu angeordnet ist, die zweite Halterung (30) im Entriegelungszustand zu entriegeln, wobei die zweite Halterung (30) dazu angeordnet ist, sich im Entriegelungszustand entlang der Schiene (10) zu verschieben.

5. Haltevorrichtung (1) nach einem der vorstehenden Ansprüche, wobei die erste Halterung (20) einen ersten Schenkel (27), der im Wesentlichen senkrecht zur Schiene (10) angeordnet ist, und einen zweiten Schenkel (28), der im Wesentlichen senkrecht zum ersten Schenkel (27) in einer ersten Entfernung (a) von der Schiene (10) angeordnet ist und in eine Richtung zur zweiten Halterung (30) vorsteht, umfasst, wobei die Entfernung (a) veränderbar ist, da der Schenkel (27) verstellbar an der ersten Halterung (20) angeordnet ist oder da der zweite Schenkel (28) verstellbar am ersten Schenkel (27) angeordnet ist.

6. Haltevorrichtung (1) nach einem der vorstehenden Ansprüche, wobei die zweite Halterung (30) einen dritten Schenkel (37), der im Wesentlichen senkrecht zur Schiene (10) angeordnet ist, und einen vierten Schenkel (38), der im Wesentlichen senkrecht zum dritten Schenkel (37) in einer zweiten Entfernung (b) von der Schiene (10) angeordnet ist und in eine Richtung zur ersten Halterung (20) vorsteht, umfasst, wobei die zweite Entfernung (b) veränderbar ist, da der dritte Schenkel (37) verstellbar an der zweiten Halterung (30) angeordnet ist oder da der vierte Schenkel (38) verstellbar am dritten Schenkel (37) angeordnet ist.

7. Haltevorrichtung (1) nach einem der vorstehenden Ansprüche, wobei die Schiene (10) einen ersten Führungsraum (14a) umfasst, der sich zwischen dem ersten Ende (11) und dem zweiten Ende (12) erstreckt und eine erste Öffnung (14b) aufweist, die der zweiten Seite (14) der Schiene (10) zugewandt ist, wobei der erste Führungsraum (14a) dazu angeordnet ist, die erste Halterung (20), die Aufnahme (24) und die zweite Halterung (30) zu führen, wenn diese entlang der Schiene (10) bewegt werden, wobei die erste Halterung (20), die Aufnahme (24) und die zweite Halterung (30) erste Einrichtungen (20a, 24a, 30a) aufweisen, die jeweils im ersten Führungsraum (14a) angeordnet und dazu angeordnet sind, sich entlang des ersten Führungsraums (14a) der Schiene (10) zu verschieben.

8. Haltevorrichtung (1) nach einem der vorstehenden Ansprüche, wobei die Schiene (10) ferner mindestens eine erste Befestigungsvorrichtung (40) zum Befestigen der Haltevorrichtung (1) an der Fläche umfasst, wobei die Schiene (10) ferner einen zweiten Führungsraum (13a) umfasst, der sich zwischen dem ersten Ende (11) und dem zweiten Ende (12) erstreckt und eine zweite Öffnung (13b) aufweist, die der ersten Seite (13) der Schiene (10) zugewandt ist, wobei der zweite Führungsraum (13a) dazu angeordnet ist, die mindestens eine erste Befestigungsvorrichtung (40) aufzunehmen und zu führen, wobei die mindestens eine Befestigungsvorrichtung (40) dazu angeordnet ist, mit der Schiene (10) in einer veränderbaren Position entlang der Schiene (10) verbunden zu sein, indem eine zweite Einrichtung (41) im zweiten Führungsraum (13a) angeordnet und dazu angeordnet ist, sich entlang des zweiten Führungsraums (13a) der Schiene (10) zu verschieben.

9. Haltevorrichtung (1) nach einem der vorstehenden Ansprüche, wobei die Schiene (10) ferner mindestens eine zweite Befestigungsvorrichtung (50) zum Befestigen der Haltevorrichtung (1) an der Fläche umfasst, wobei die Schiene (10) ferner mehrere beabstandete Bohrungen (15) umfasst, die entlang der Schiene (10) angeordnet sind, wobei die mindestens eine zweite Befestigungsvorrichtung (50) dazu angeordnet ist, mit der Schiene (10) in einer veränderbaren Position entlang der Schiene (10) verbunden zu sein, indem dritte Einrichtungen (51) in der mindestens einen Bohrung (15) entlang der Schiene (10) anordenbar sind.

10. Haltevorrichtung (1) nach einem der vorstehenden Ansprüche, wobei die zweite Halterung (30) einen Gurt (39) zum Fixieren eines Gegenstands an der zweiten Halterung (30) umfasst.

## Revendications

1. Dispositif de maintien (1) conçu pour être monté sur une surface à l'intérieur d'un espace de chargement d'un véhicule, le dispositif de maintien (1) comprenant :
au moins un rail allongé (10) s'étendant entre une première extrémité (11) et une seconde extrémité (12), le rail (10) comprenant en outre un premier côté (13) conçu pour être attaché de manière fixe à ladite surface, et un second côté (14) opposé au premier côté (13),
un premier support (20) relié de manière mobile au second côté (14) du rail (10), et conçu pour glisser le long du rail (10) entre la première et la seconde extrémité (11, 12) du rail (10),
un second support (30), conçu pour être relié de manière fixe au second côté (14) du rail (10) dans une position réglable le long du rail (10), entre le premier support (20) et l'une des première et seconde extrémités (11, 12) du rail (10), **caractérisé en ce que** le premier support (20) comprend un ressort (21) attaché avec une première extrémité (22) au premier support (20) et attaché avec une seconde extrémité (23) à une monture (24), laquelle monture (24) est conçue pour être reliée de manière fixe au second côté (14) du rail (10) dans une position réglable le long du rail (10), entre le premier support (20) et le second support (30), dans lequel le ressort (21) est un ressort à bande à force constante (21) .

2. Dispositif de maintien (1) selon la revendication 1, dans lequel le premier support (20) comprend un logement (25) conçu pour accueillir le ressort (21), dans lequel la première extrémité (22) du ressort (21) est fixée au logement (25).

3. Dispositif de maintien (1) selon l'une quelconque des revendications précédentes, dans lequel la monture (24) comprend un premier dispositif de verrouillage (26) conçu pour verrouiller la monture (24) au rail (10) dans un état verrouillé et conçu pour déverrouiller la monture (24) dans un état déverrouillé, dans lequel la monture (24) est conçue pour glisser le long du rail (10) dans l'état déverrouillé.

4. Dispositif de maintien (1) selon l'une quelconque des revendications précédentes, dans lequel le second support (30) comprend un second dispositif de verrouillage (36) conçu pour verrouiller le second support (30) au rail (10) dans un état verrouillé et conçu pour déverrouiller le second support (30) dans un état déverrouillé, dans lequel le second support (30) est conçu pour glisser le long du rail (10) dans l'état déverrouillé.

5. Dispositif de maintien (1) selon l'une quelconque des revendications précédentes, dans lequel le premier support (20) comprend une première tige (27) qui est disposée sensiblement perpendiculairement au rail (10) et une deuxième tige (28) qui est disposée sensiblement perpendiculairement à la première tige (27) à une première distance (a) du rail (10) et fait saillie en direction du second support (30), dans lequel la première distance (a) peut être réglée par le fait que la première tige (27) est disposée de manière réglable au niveau du premier support (20) ou par le fait que la deuxième tige (28) est disposée de manière réglable au niveau de la première tige (27).

6. Dispositif de maintien (1) selon l'une quelconque des revendications précédentes, dans lequel le second support (30) comprend une troisième tige (37) qui est disposée sensiblement perpendiculairement au rail (10) et une quatrième tige (38) qui est disposée sensiblement perpendiculairement à la troisième tige (37) à une seconde distance (b) du rail (10) et fait saillie en direction du premier support (20), dans lequel la seconde distance (b) peut être réglée par le fait que la troisième tige (37) est disposée de manière réglable au niveau du second support (30) ou par le fait que la quatrième tige (38) est disposée de manière réglable au niveau de la troisième tige (37).

7. Dispositif de maintien (1) selon l'une quelconque des revendications précédentes, dans lequel le rail (10) comprend un premier espace de guidage (14a) s'étendant entre la première extrémité (11) et la seconde extrémité (12) et avec une première ouverture (14b) orientée vers le second côté (14) du rail (10), dans lequel le premier espace de guidage (14a) est conçu pour guider le premier support (20), la monture (24) et le second support (30) lorsqu'ils sont déplacés le long du rail (10), dans lequel le premier support (20), la monture (24) et le second support (30) ont des premiers moyens (20a, 24a, 30a) disposés chacun dans le premier espace de guidage (14a) et disposés pour glisser le long du premier espace de guidage (14a) du rail (10).

8. Dispositif de maintien (1) selon l'une quelconque des revendications précédentes, dans lequel le rail (10) comprend en outre au moins un premier dispositif de fixation (40) pour la fixation du dispositif de maintien (1) à ladite surface, dans lequel le rail (10) comprend en outre un second espace de guidage (13a) qui s'étend entre la première extrémité (11) et la seconde extrémité (12) et qui présente une seconde ouverture (13b) orientée vers le premier côté (13) du rail (10), dans lequel le second espace de guidage (13a) est conçu pour accueillir et guider l'au moins un premier dispositif de fixation (40), dans lequel l'au moins un premier dispositif de fixation (40) est conçu pour être relié au rail (10) dans une position réglable le long du rail (10) au moyen de deuxièmes moyens (41) disposés dans le second espace de guidage (13a) et conçus pour glisser le long du second espace de guidage (13a) du rail (10).

9. Dispositif de maintien (1) selon l'une quelconque des revendications précédentes, dans lequel le rail (10) comprend en outre au moins un second dispositif de fixation (50) pour la fixation du dispositif de maintien (1) à ladite surface, dans lequel le rail (10) comprend en outre une pluralité de trous espacés (15) disposés le long du rail (10), dans lequel l'au moins un second dispositif de fixation (50) est conçu pour être relié au rail (10) dans une position réglable le long du rail (10) au moyen de troisièmes moyens (51) qui peuvent être placés dans l'un moins un des trous (15) le long du rail (10) .

10. Dispositif de maintien (1) selon l'une quelconque des revendications précédentes, dans lequel le second support (30) comprend une sangle (39) pour fixer un article au second support (30).
